(19) Europäisches Patentamt
European Patent Office
Office européen des brevets

(11) **EP 4 199 009 A1**

(12) **EUROPEAN PATENT APPLICATION**

(43) Date of publication:
**21.06.2023 Bulletin 2023/25**

(21) Application number: **21214563.5**

(22) Date of filing: **14.12.2021**

(51) International Patent Classification (IPC):
**H01B 12/16** (2006.01)   **F28D 15/00** (2006.01)

(52) Cooperative Patent Classification (CPC):
**H01B 12/16**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Supernode Limited**
**Dublin 12 (IE)**

(72) Inventors:
• **VOLSCHENK, Deon**
  **Dublin (IE)**
• **HODGE, Eoin**
  **Dublin (IE)**

(74) Representative: **FRKelly**
**27 Clyde Road**
**Dublin D04 F838 (IE)**

Remarks:
Amended claims in accordance with Rule 137(2) EPC.

(54) **A SUPERCONDUCTING CABLE SYSTEM WITH EVAPORATIVE COOLING**

(57)   The present invention provides a superconducting cable system suitable for use over long distances and adapted to achieve improved heat absorption through the use of the latent heat of vaporisation of a liquid cryogen, the system including a cryogen supply duct, a superconductor extending longitudinally of the supply duct, a vapour return duct and an evaporation enabling medium disposed between the supply duct and the vapour return duct.

Fig. 1

**Description**

Field of the invention

The present invention relates to a superconducting cable system which employs evaporative cooling of cryogen in order to provide enhanced cooling performance, in particular in superconducting cable systems operating over long distances.

Background of the invention

Within superconducting cable systems, at least one electrically conducting element or superconductor must be maintained at temperatures below the material transition temperature ($T_c$) to enable superconductivity. Superconductor transition temperatures vary from $T_c < 10$ K for classic metallic superconductors up to values of $T_c > 100$ K for ceramic high-temperature superconductors (HTS). Superconductors also require stable temperatures during operation to maintain predictable transmission characteristics.

If these sufficiently low temperatures (< 90K) in the HTS core of a superconducting power cable are not maintained the tapes become resistive and develop heat through Joule heating leading to rising temperature and a catastrophic runaway situation can arise resulting in equipment damage and transmission interruption.

Cooling of the HTS tapes as a standard is achieved by forced convection of a subcooled cryogenic fluid in which heat is absorbed through sensible heating. Cooling capacity of the subcooled system is thus limited by the physical properties of the cryogen as both boiling and freezing must be avoided. This method requires inefficient re-cooling of the liquefied cryogen for sustained operation and magnifies system pressure requirements, subsequent frictional heating and costs over longer transmission distances as flow rates must be increased. More efficient and economical cooling systems and architectures are required to realize long-distance superconductor cable systems (for example >10km distance). In standard systems this can only be achieved by improving insulation or subcooling system efficiency. Both efficiency and cost are also closely related to physical system properties such as pressure and flow rate and can be improved by reducing both requirements within the system.

As a standard, cryogenic coolants such as liquefied gases (hydrogen, oxygen, nitrogen, etc.) are used as cooling mediums to achieve and maintain the required operating temperatures within superconductor systems. The cryogenic coolant is maintained at temperatures below the boiling point at the given system pressure and circulated within the system to achieve cooling, using pumps or similar pressurization systems. These systems require that excess heat be removed from the cryogenic coolant to maintain a liquefied state for continuous operation, which can be achieved through intermittent sub-coolers or cryocoolers both of which require high input power.

In single phase forced flow superconductor systems, increased system length necessitates both increased flow rates and system pressures to convey the cryogen and remove additional heat. This in turn increases the heat load due to the addition of frictional heating, which increases the requirements on heat removal systems and subsequent costs. For long distance systems this method of heat removal quickly proves uneconomical due to the high costs and low efficiency of the intermittent cooling systems.

Improvements to the state of the art have been proposed to increase the achievable length and improve efficiency through the addition of multiple cooling stages, additional cooling channels in the same cryostat. These systems however add to the overall complexity.

As a standard, cryogenic systems are insulated using complex insulation systems to improve thermal efficiency. These insulation systems comprise single or multiple layers of insulation material and spacers and are in many cases enabled by high ($10^{-4}$ to $10^1$ millitorr), soft ($10^1$ to $10^4$ millitorr) or no vacuum ($10^4$ to $10^6$ millitorr). Insulation materials include micro and nano porous foams, multi-layer insulation comprising combined layers of metallicized material and spacers (to reduce radiation heat loads) and combinations thereof. Further improvements to these systems have been realized by cooling radiation shields in vacuum systems to reduce thermal loads on the primary cooling circuit. These insulation systems are generally able to achieve thermal loads below 3 W/m within the cryogenic systems.

As noted, standard cryogenic forced flow systems are maintained within a single phase (liquid or gas) to maintain stable pressures and temperatures. This limits the available heat removal to sensible heating of the cryogen through temperature increases only.

It is therefore an object of the present invention to provide a superconducting cable system which achieves improved cooling efficiency at reduced complexity and thus increased reliability.

Summary of the invention

According to a first aspect of the present invention there is provided a superconducting cable system comprising at least one liquid permeable supply duct; a supply of cryogenic fluid within a lumen of the at least one supply duct; at least one superconductor extending longitudinally of the at least one supply duct and in thermal communication with the cryogenic fluid; at least one vapour return duct; and an evaporation enabling medium disposed between the at least one supply duct and the at least one vapour return duct and arranged to affect a phase change of the cryogen therein through the latent heat of vaporization.

Preferably, the evaporation enabling medium has permeability in the range of between $10^{-12}$ and $10^{-14}$

m$^2$.

Preferably, the evaporation enabling medium comprises a capillary structure.

Preferably, the evaporation enabling medium comprises a wick.

Preferably, evaporation enabling medium comprises a porous medium.

Preferably, the evaporation enabling medium has porosity in the range of between 60% and 90%.

Preferably, the evaporation enabling medium has a pore size in the range of between 0.15μm and 10μm.

Preferably, the evaporation enabling medium comprises a metallic and/or a polymer or polymer composite material.

Preferably, the evaporation enabling medium comprises a layered or laminated structure.

Preferably, the evaporation enabling medium comprises open celled foam.

Preferably, the evaporation enabling medium comprises a permeable substrate.

Preferably, the at least one superconductor is in retained within a lumen of theat least one supply duct.

Preferably, the superconducting cable system comprises a pressure generator operable to establish a pressure differential between the at least one supply duct and the at least on vapour return duct in the range of between 1 bar and 25 bar.

Preferably, the pressure generator is operable to modulate the pressure differential.

Preferably, the superconducting cable system comprises a pressure release system operable to release pressure from within the at least one vapour return duct.

Preferably, the at least one supply duct is surrounded by the evaporation enabling medium.

Preferably, the at least one superconductor, at least one supply duct, evaporation enabling medium and at least one vapour return duct are concentrically arranged.

According to a second aspect of the present invention there is provided a method for controlling the temperature of a material contained within an elongate conduit,, the method comprising the steps of forcing a liquid cryogen along a supply path within the conduit and in thermal communication with the material; driving at least a portion of the liquid cryogen across an evaporation enabling medium and absorbing heat so as to evaporate into a vapour return duct using the latent heat of vaporization; and extracting the vaporised cryogen from the vapour return duct.

Preferably, the method comprises utilising capillary action to move the cryogen through the evaporation enabling medium.

Preferably, the method comprises driving the cryogen radially outwardly from the at least one supply path through the evaporation enabling medium to the at least one vapour return duct.

Preferably, the method comprises driving the cryogen radially inwardly from the at least one supply path through the evaporation enabling medium to the at least one vapour return duct.

Preferably, the method comprises establishing a pressure differential between the at least one supply duct and the at least on vapour return duct in the range of between 1 bar and 25 bar.

Preferably, the material comprises a superconductor extending longitudinally within the conduit and arranged in thermal communication with the liquid cryogen.

According to a further aspect of the present invention there is provided a cryogen conduit comprising at least one liquid permeable supply duct; a supply of cryogenic fluid within a lumen of the at least one supply duct; at least one vapour return duct; and an evaporation enabling medium disposed between the at least one supply duct and the at least one vapour return duct and arranged to affect a phase change of at least a portion of the cryogen therein through the latent heat of vaporization

Brief description of the drawings

The present invention will now be described with reference to the accompanying drawings, in which:

Figure 1 illustrates a perspective view of a superconducting cable system according to a first embodiment of the present invention;

Figure 2 illustrates an end elevation of the superconducting cable system shown in Figure 1;

Figure 3 illustrates a sectioned side elevation of the superconducting cable system shown in Figures 1 and 2, with a pair of cryogen circulating pumps shown schematically;

Figure 4 illustrates a perspective view of a superconducting cable system according to a second embodiment of the present invention;

Figure 5 illustrates an end elevation of the superconducting cable system shown in Figure 4;

Figure 6 illustrates a perspective view of a superconducting cable system according to a third embodiment of the present invention;

Figure 7 illustrates an end elevation of the superconducting cable system shown in Figure 6;

Figure 8 illustrates a perspective view of a superconducting cable system according to a fourth embodiment of the present invention;

Figure 9 illustrates an end elevation of the superconducting cable system shown in Figure 8;

Figure 10 illustrates a perspective view of a superconducting cable system according to a fifth embodiment of the present invention;

Figure 11 illustrates an end elevation of the superconducting cable system shown in Figure 10;

Figure 12 illustrates a perspective view of a superconducting cable system according to a sixth embodiment of the present invention;

Figure 13 illustrates an end elevation of the superconducting cable system shown in Figure 12;

Figure 14 illustrates a perspective view of a superconducting cable system according to a seventh embodiment of the present invention;

Figure 15 illustrates an end elevation of the superconducting cable system shown in Figure 14;

Figure 16 illustrates a perspective view of a superconducting cable system according to an eight embodiment of the present invention;

Figure 17 illustrates an end elevation of the superconducting cable system shown in Figure 16;

Figure 18 illustrates a perspective view of a superconducting cable system according to a ninth embodiment of the present invention;

Figure 19 illustrates an end elevation of the superconducting cable system shown in Figure 18;

Figure 20 illustrates a perspective view of a superconducting cable system according to a tenth embodiment of the present invention;

Figure 21 illustrates an end elevation of the superconducting cable system shown in Figure 20;

Figure 22 illustrates a perspective view of a superconducting cable system according to an eleventh embodiment of the present invention;

Figure 23 illustrates an end elevation of the superconducting cable system shown in Figure 22;

Figure 24 illustrates a perspective view of a superconducting cable system according to a twelfth embodiment of the present invention;

Figure 25 illustrates an end elevation of the superconducting cable system shown in Figure 24;

Figure 26 illustrates a perspective view of an embodiment of a cryogen conduit according to the present invention;

Figure 27 illustrates an end elevation of the cryogen conduit shown in Figure 26;

Figure 28 illustrates a sectioned side elevation of the cryogen conduit shown in Figures 26 and 27, with a number of cryogen circulating pumps shown schematically;

Figure 29 illustrates a perspective view of an alternative embodiment of a cryogen conduit according to the present invention;

Figure 30 illustrates an end elevation of the cryogen conduit shown in Figure 29; and

Figure 31 illustrates a sectioned side elevation of the cryogen conduit shown in Figures 29 and 30, with a pair of cryogen circulating pumps shown schematically.

Detailed description of the drawings

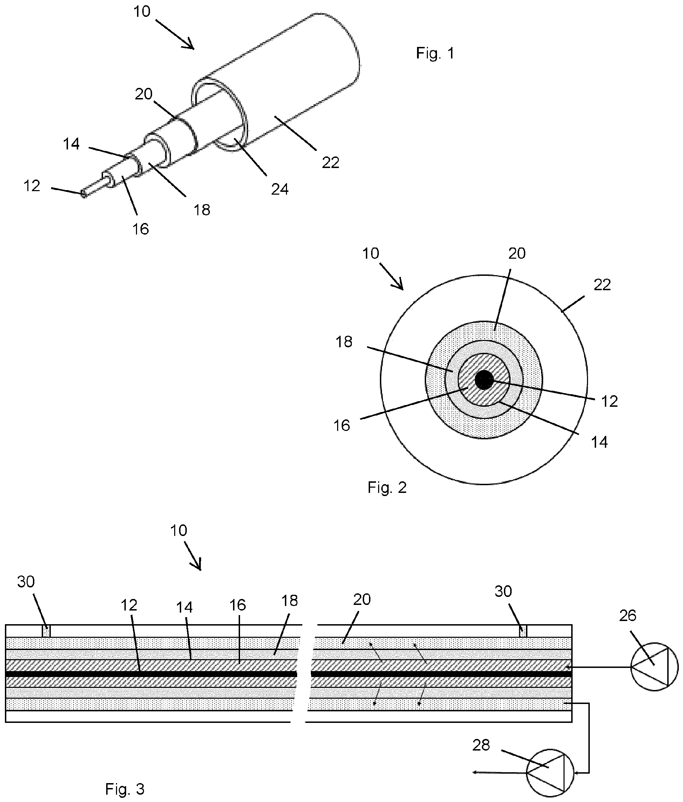

Referring now to Figures 1 to 3 of the accompanying drawings there is illustrated a first embodiment of a superconducting cable system according to the present invention, generally indicated as 10, for particular use is providing long distance superconducting capabilities while providing improving efficiency in heat absorption and management through cryogen processing, thereby avoiding or reducing the problems of the prior art as detailed above.

The cable system 10 comprises a superconductor 12 which may be of any suitable material, and may comprise a single component or multiple components, for example an array or arrangement of superconducting ribbons or the like. The superconductor 12 may be configured to conduct single pole or multipole direct current (DC) or single phase or multiphase alternating current (AC), and may be physically arranged on concentric axes (for example a tri-axis arrangement in a three phase system) or adjacent axes (a tri-ad arrangement for a three phase system).

The superconductor 12 extends longitudinally within a central lumen of a supply duct 14 which, in use, defines a primary flow channel which is at least partially filled with a cryogenic fluid (cryogen) 16, for example liquid hydrogen, nitrogen, helium, although it is envisaged that any other liquid, cryogens or combinations thereof may be utilised. In this way the superconductor 12 is in thermal communication with the cryogen 16 in order to maintain the requisite cryogenic temperature required for superconductivity. Although in the embodiment illustrated the superconductor 12 is in direct contact with the cryogen 16 in order to establish thermal communication, it is also possible, as described and shown in later embodiments, that indirect contact between the superconductor and cryogen may still provide the necessary thermal communication to allow heat absorption from the environment and/or the superconductor 12. The operating temperature of the cryogen 16 may vary depending on the operating requirements and/or conditions of the cable system 10 or additional or alternative parameters, and for example where liquid nitrogen is used as the cryogen 16 the operating temperature may be in the range of 67°K to 77°K at an operating pressure of between 0 bar and 25 bar. It should however be understood that these are exemplary parameters and lower or higher temperatures and/or pressures may be employed. It should also be understood that the superconductor 12 could be arranged for example eccentrically or extend helically or the like, while still extending longitudinally relative to the overall length of the cable system 10.

The cable system 10 additionally comprises a layer of an evaporation enabling medium 18 surrounding the supply duct 14, and which may be provided as a continuous circumferentially and axially extending layer or may be of a discrete or discontinuous configuration, the characteristics and functionality of which will be described in detail hereinafter. The supply duct 14 may have a dedicated or discrete sidewall or may be defined by the inner circumferential surface of the evaporation enabling medium 18, but in each case there is a liquid permeable path between the supply duct 14 and the evaporation enabling medium 18 via which liquid cryogen 16 can migrate. A vapour return path is defined by a circumscribing vapour return duct 20 surrounding the evaporation enabling medium 18, and again may comprising a dedicated inner circumferential sidewall or may be defined by the outer circumferential surface of the evaporation enabling medium 18. In either case there is a vapour permeable path between the evaporation enabling medium 18 and the vapour return duct 20 via which evaporated cryogen can flow. An outer casing or cryostat 22 surrounds and encloses the vapour return duct 20 and in use defines a vacuum annulus 24 to provide additional thermal insulation for the system 10. The vacuum drawn in the vacuum annulus 22 reduces thermal convection in the cable system 10, and in the embodiment illustrated may be in the range of between

$10^{-3}$ and 1000 Pa, more preferably between $10^{-3}$ and 10 Pa although alternative vacuum levels may employed. It is also to be understood that additional or alternative layers or forms of insulation may be provided as part of the superconducting cable system 10 as are well known in the art. These layers may be located at various suitable locations or layers within the system 10.

The superconducting cable system 10 of the present invention is novel in that it functions through a combination of pressure differential and capillary action, enabled by a temperature differential between the cryogen 16 and the environment. High pressure subcooled liquefied cryogen 16 is supplied from an external source (not shown) to a primary flow channel defined by the supply duct 14 from where it saturates the evaporation enabling medium 18, transitioning to a mixed state as heat is absorbed through the latent heat of vaporization. Gaseous cryogen is then discharged into the vapour return duct 20 where it is subject to low-pressure extraction via the second pump 28.

Referring to Figure 3, the superconducting cable system 10 preferably additionally comprises a pressure differential generator operable to establish a pressure differential across the evaporation enabling medium 18, in the radial direction, such as to drive liquid cryogen 16 from the supply duct 14, through the evaporation enabling medium 18 to undergo evaporation and exit into the vapour return duct 20. The pressure differential generator for example comprises a first pump 26 operable to effect forced flow of the liquid cryogen 16 through the supply duct 14 at an elevated pressure, and a second pump 28 operable to withdraw vaporised cryogen from within the vapour return duct 20. Any other functional alternative to the first and second pumps 26, 28 may of course be employed to establish the requisite pressure differential across the evaporation enabling medium 18. The vaporised cryogen may then be condensed for reintroduction to the supply duct 14 for further cooling duties, or may be vented or otherwise processed. In this regard the cable system 10 preferably comprises a pressure relief mechanism in the form of one or more pressure venting valves 30 located in the outer sidewall of the vapour return duct 20 via which pressure can be relieved therefrom if required.

The first and second pumps 26, 28 may be operated to establish any necessary pressure differential across the evaporation enabling medium 18, for example in the range of between 1 bar and 25 bar, although this may vary depending on operating conditions or other parameters such as the configuration of the evaporation enabling medium 18, the selected cryogen, operating length of the superconductor 12, etc. For example the first pump 26 may establish a pressure differential of between 10 bar and 25 bar in the liquid cryogen 16 in the supply duct 14 while the second pump 28 may generate a pressure of around 1 bar in the gaseous cryogen in the return duct 20.

In the embodiment illustrated the evaporation enabling medium 18 may comprises one or more of a permeable wick, porous membrane, open cell porous foam or a combination thereof. The pressurised liquid cryogen 16 in the supply duct 14 permeates through the evaporation enabling medium 18 undergoing a phase transition from liquid to vapour before flowing into the vapour return duct 20. The primary function of the evaporation enabling medium 18 is to accept energy in the form of both heat and pressure to allow transition of the cryogen 16 from a liquid state to a gaseous or vapor state. The evaporation enabling medium 18 is then maintained at a relatively constant temperature through latent heat of vaporisation which serves to stabilize and regulate the temperature of both the superconductor 12 and the supply duct 14. Utilising the latent heat of vaporization of the cryogen 16 presents a method for removing greater amounts of heat from the superconducting cable system 10 at lower flow rates than those required using sensible heating.

In a particularly preferred embodiment the evaporation enabling medium 18 may comprise a metallic material, polymer/polymer composite, polypropylene or equivalent with a low coefficient of thermal expansion (CTE), or a layered or laminated composite system (for example pre-preg or wet layup) comprising material mixtures of the above. Polymer and composite layers may be combined using any suitable manufacturing techniques including but not limited to extrusion, co-extrusion, pultrusion, automated tape laying, automated fibre placement, filament winding, fibre braiding, 3D printing or similar additive manufacturing techniques.

Fluid flow and phase change through the evaporation enabling medium 18 are controlled by the permeability, porosity, and pore size of the medium 18. Depending on the cryogenic liquid flow rate, pressure differential between the supply duct 14 and vapour return duct 20, as well as the geometric characteristics (i.e., diameter and thickness), exemplary characteristics of the evaporation enabling medium 18 are as follows:

- Permeability ranges from $10^{-12}$ to $10^{-14}$ m2
- Porosity ranges between 60 and 90%
- Pore sizes ranges between 0.15 $\mu$m to 10 $\mu$m

Controlled porosity within the evaporation enabling medium 18 may be incorporated through existing elements such as core flow nano-porous sheaths. Porosity within sheaths or similar porous structures may be achieved through one or several manufacturing processes depending on the required size of the pores and overall porosity. Processes include:

- Thermoplastic foaming with chemical and/or physical blowing agents
- Nano-fillers within polymers to control elongation rheology (primarily results in closed cell foams)
- Liquid/solid gel processes (such as those used to manufacture aerogels) for the structure or application of these materials onto permeable substrates.
- Additive manufacturing of fibrous constructs or Nano-papers (nanotubes, bacterial cellulose)
- Digestion methods (such as synthesis of aramid nanofibers)
- Dissolving sacrificial nano-fibrous fillers

Over long distances changes in terrain and elevation lead to changes in internal system supply pressures which are required to be managed. The primary interfaces of the superconducting cable system 10 include a high pressure ($\geq$10 bar) liquefied cryogen supply to the supply duct 14 and low pressure ($\leq$1 bar) gas evacuation from the vapour return duct 20.

Although the primary method of heat absorption is through evaporation of the cryogen 16, additional heat absorption may be realized through sensible heating of either the liquefied cryogen or the gaseous cryogen during supply and low-pressure evacuation. The high insulation efficiency of the cable system 10, resulting in low heat transfer across the system boundary, combined with the pressure differential across the evaporation enabling medium 18, may lead to temperature reductions within the cryogen from the Joule-Thompson effect and further heat absorption capacity.

The heat absorption rate within the superconducting cable system 10 may be modulated and controlled by controlling the pressure differential between the supply duct 14 and the vapour return duct 20. Heat absorption rate is directly linked to the amount of liquid cryogen 16 allowed to evaporate through the evaporation enabling medium 18 as represented by the equation:

$$\phi_v = \rho \, \frac{kA}{\mu d} \, \Delta p$$

where $\Phi_V$ is the flow of liquid cryogen (e.g. nitrogen, hydrogen, helium, etc.), $\rho$ the density of the cryogen, k is the permeability of the evaporation enabling medium 18, $\mu$ is the dynamic viscosity of the liquid cryogen, A is the cross-sectional area of the evaporation enabling medium 18 through which the liquid cryogen flows, d the evaporation enabling medium thickness (e.g. in the radial direction), and $\Delta$p is the pressure gradient across the evaporation enabling medium 18, for example as established by the first and second pumps 26, 28.

Additionally, in long-distance applications, pressure relief may be achieved via the pressure relief mechanism 30 to depressurize the gaseous cryogen within the vapour return duct 20 and ensure a low-pressure environment, conducive to evaporation, is maintained. In order to prevent liquid cryogen from entering the vapour return duct 20 the evaporation enabling medium 18 may be provided with a vapour permeable but liquid impermeable membrane (not shown) surrounding the outer sidewall of the evaporation enabling medium 18.

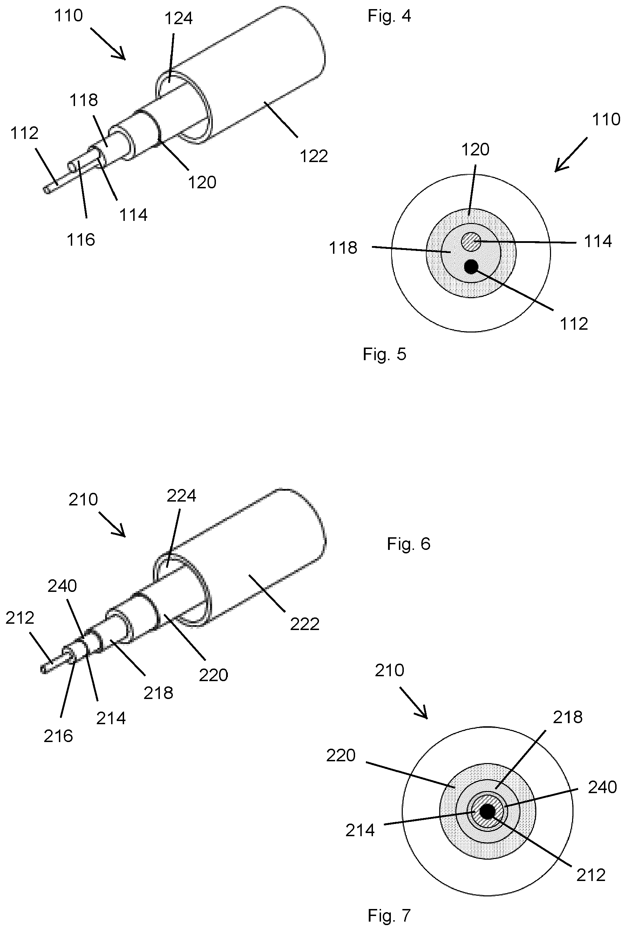

The superconducting cable system of the invention may be implemented by way of a number of different embodiments as detailed hereinafter. For example referring to Figures 4 and 5 there is illustrated a second embodiment of a superconducting cable system according to the invention and generally indicated as 110. In this second embodiment like components have been accorded like reference numerals and unless otherwise stated perform a like function.

The cable system 110 comprises a superconductor 112 and a supply duct 114 containing a liquid cryogen 116, both of which are captured, in parallel spaced relationship, within a core of an evaporation enabling medium 118. The evaporation enabling medium 118 is itself surrounded by a vapour return duct 120 housed within an outer cryostat 122 and separated therefrom by an insulating vacuum annulus 124.

In use liquid cryogen is pumped under pressure through the supply duct 114 and is driven under pressure into the surrounding evaporation enabling medium 118, changing phase to pass as a vapour into the vapour return duct 120, thereby absorbing heat in the form of the latent heat of vaporisation of the liquid cryogen. The latent heat of vaporisation thus maintains the evaporation enabling medium 118 at the requisite temperature to ensure that the superconductor 112 captured therein is also at the correct operating temperature. As with the first embodiment, the supply duct 114 and/or the inner wall of the vapour return duct 120 may be integral with the evaporation enabling medium 118 or may be a discrete component which is then liquid permeable as described in further detail hereinafter in relation to later embodiments. Such a discrete sidewall may act as a substrate for the wicking/capillary material of the evaporation enabling medium 118. Such a substrate may also be arranged to regulate pressure in the evaporation enabling material 118 along the length of the cable system 110.

Turning then to Figures 6 and 7 there is illustrated a third embodiment of a superconducting cable system according to the invention and generally indicated as 210. In this third embodiment like components have been accorded like reference numerals and unless otherwise stated perform a like function.

The cable system 210 corresponds substantially to the cable system 10 of the first embodiment, comprising a superconductor 212 located concentrically within a supply duct 214 containing a liquid cryogen 216. The supply duct 214 is surrounded by evaporation enabling medium 218, but is however defined by a discrete perforated or otherwise liquid permeable cylindrical sidewall 240 as opposed to being defined by the inner surface of the evaporation enabling medium 218. The perforated sidewall 240 provides additional strength while facilitating greater control over the flow of liquid cryogen from the supply duct 214 into the evaporation enabling medium 218. The perforated sidewall 240 may be utilised as a substrate for manufacturing the evaporation enabling medium 218, and may also be configured to manage pressure drop along the length of the cable system 210 in such a way that presents a consistent pressure to the evaporation enabling medium 218. This provides advantageous additional control over the design and manufacturing of structure permeability, particularly considering that the permeability of the evaporation enabling medium 218 is implemented along the distance of the superconducting cable 10 transmission length.

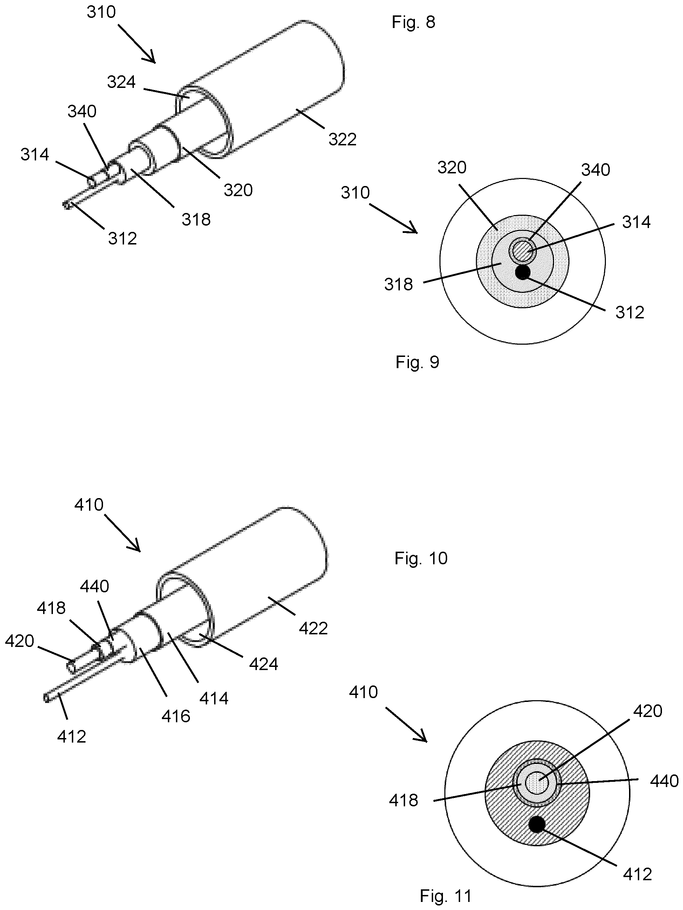

The evaporation enabling medium 218 is surrounded by a vapour return duct 220 which is further enclosed within a protective outer cryostat 222 with an insulating vacuum annulus 224 therebetween. Figures 8 and 9 illustrate a fourth embodiment of a superconducting cable system according to the invention and generally indicated as 310. In this fourth embodiment like components have been accorded like reference numerals and unless otherwise stated perform a like function.

The cable system 310 corresponds substantially to the cable system 110 of the second embodiment, comprising a superconductor 312 and a parallel offset supply duct 314 both encased in a core of an evaporation enabling medium 318 itself surrounded by a vapour return duct 320. An outer protective cryostat 322 with an insulating vacuum annulus 324 therebetween surround the vapour return duct 320. The supply duct 314 is defined by a discrete perforated or otherwise liquid permeable cylindrical sidewall 340 as opposed to being defined by the inner surface of the evaporation enabling medium 318. The permeability of the sidewall 340 may be selected to control the flow rate of liquid cryogen into the evaporation enabling medium 318.

The vapour return duct 320 is enclosed within a protective outer casing or cryostat 322 with an insulating vacuum annulus 324 defined therebetween to provide thermal insulation. It will be understood that additional or alternative thermal and/or electrical insulation may be employed.

Figures 10 and 11 illustrate a fifth embodiment of a superconducting cable system according to the invention and generally indicated as 410. In this fifth embodiment like components have been accorded like reference numerals and unless otherwise stated perform a like function.

The cable system 410 comprises a superconductor 412 contained within a supply duct 414 carrying a liquid cryogen 416. Contained within the supply duct 414 is a vapour return duct 420 surrounded by an intervening cylindrical layer of an evaporation enabling medium 418, an outer surface of which is surrounded by a discrete perforated sidewall 440. In this embodiment liquid cryogen flows under pressure radially inward from the supply duct 414, through the perforated sidewall 440 and into the evaporation enabling medium 418 to undergo a phase change. The vaporised cryogen flows into the centrally located vapour return duct 420 for extraction as hereinbefore described.

The perforated sidewall 440 may similarly be configured to manage pressure drop along the flow length of the supply duct 414 in such a way that presents a consistent pressure to the evaporation enabling medium 418. This provides advantageous additional control over the design and manufacturing of structure permeability.

An outer protective cryostat 422 with an insulating vacuum annulus 424 therebetween surround the vapour return duct 420.

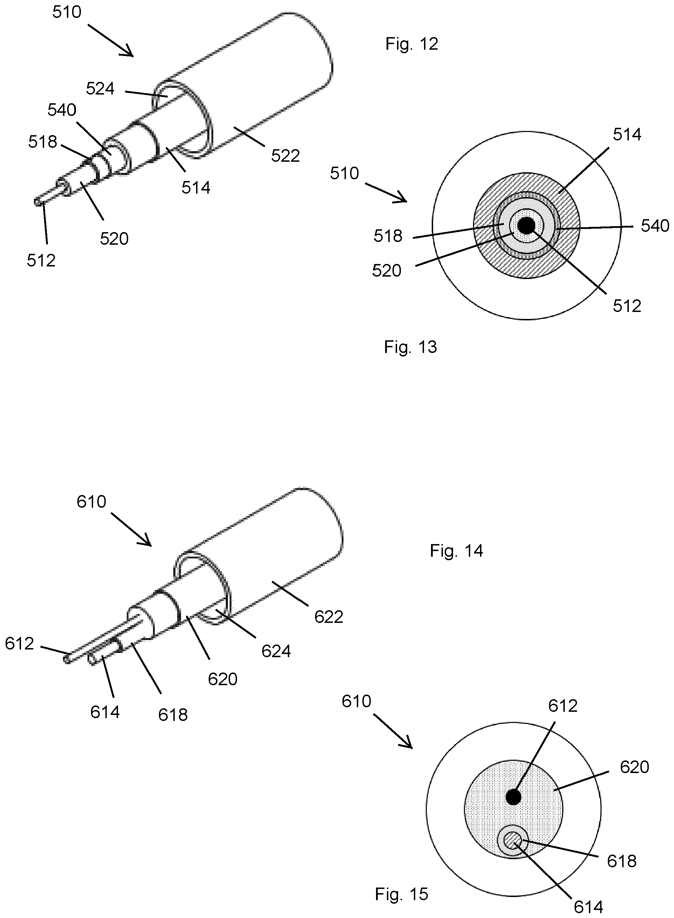

Figures 12 and 13 illustrate a sixth embodiment of a superconducting cable system according to the invention and generally indicated as 510. In this sixth embodiment like components have been accorded like reference numerals and unless otherwise stated perform a like function.

The cable system 510 comprises a supply duct 514 located concentrically within which is a vapour return duct 520, with a cylindrical layer of evaporation enabling material 518 disposed therebetween and carried on a perforated or otherwise liquid permeable discrete sidewall 540. A superconductor 512 is located concentrically within the vapour return duct 520. In this embodiment the liquid cryogen is forced radially inwardly from the supply duct 514, through the sidewall 540 and evaporation enabling medium 518 to exit as vapour into the vapour return duct 520.

A protective outer cryostat 522 surrounds the supply duct 514 and contains a vacuum annulus 524.

Figures 14 and 15 illustrate a seventh embodiment of a superconducting cable system according to the invention and generally indicated as 610. In this seventh embodiment like components have been accorded like reference numerals and unless otherwise stated perform a like function.

The cable system 610 comprises a vapour return duct 620 captured within which is a superconductor 612 and a parallel and spaced supply duct 614 surrounded by a cylindrical layer of evaporation enabling medium 618. In this embodiment the superconductor 612 is located within the vapour return duct 620, whereby heat transfer and the thermal gradient can be regulated by modulating pressure within the supply duct 614 and vapour return duct 620 and subsequent regulation of the evaporation front.

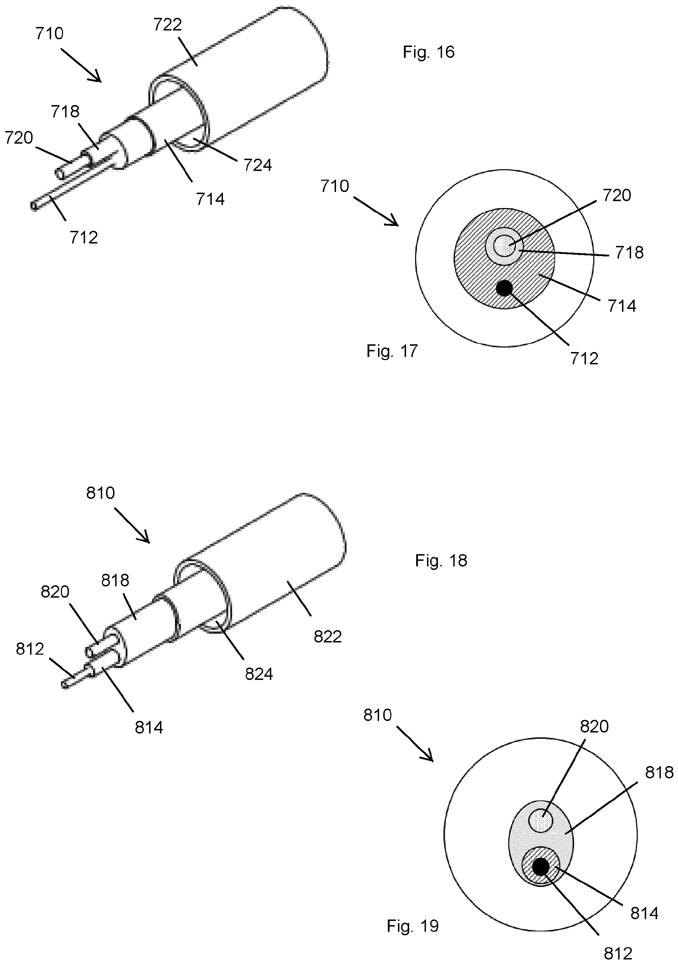

Figures 16 and 17 illustrate an eighth embodiment of a superconducting cable system according to the invention and generally indicated as 710. In this eighth embodiment like components have been accorded like reference numerals and unless otherwise stated perform a like function.

The cable system 710 comprises a supply duct 714 containing a superconductor 712 surrounded by a liquid cryogen 716. Captured within the supply duct 714 is a vapour return duct 710 surrounded by an evaporation enabling medium 718. An outer cryostat 722 surrounds the supply duct 714 and containing a vacuum annulus 724.

Figures 18 and 19 illustrate a ninth embodiment of a superconducting cable system according to the invention and generally indicated as 810. In this ninth embodiment like components have been accorded like reference numerals and unless otherwise stated perform a like function.

The cable system 810 comprises a core of an evaporation enabling medium 818 captured eccentrically within which are vapour return duct 820 and a parallel but offset liquid cryogen supply duct 814 within which is located a superconductor 812. An outer cryostat 822 surrounds the supply evaporation enabling medium 818 and defines a vacuum annulus 824.

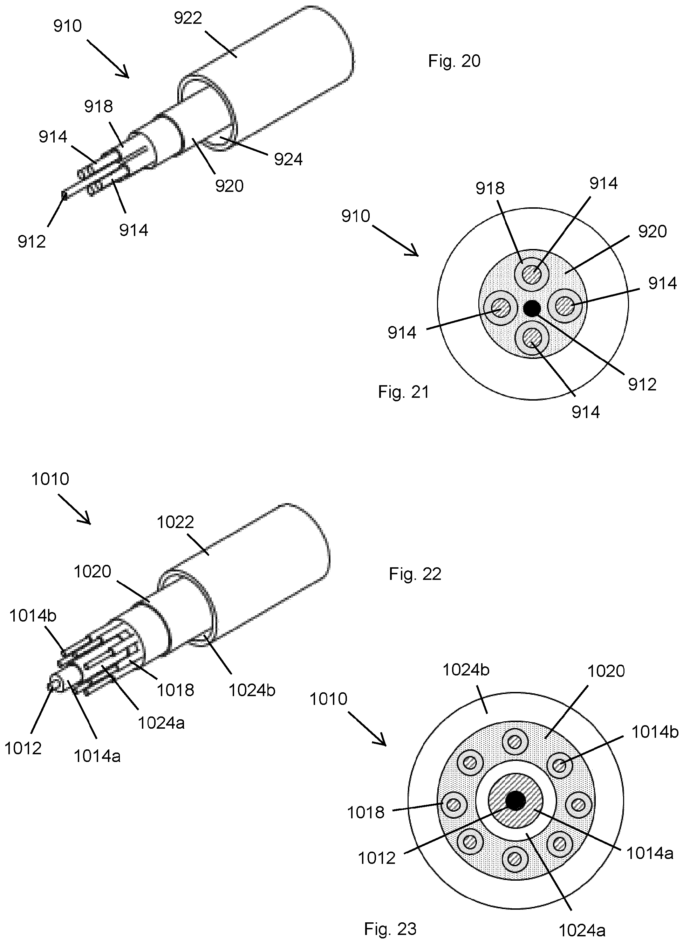

Figures 20 and 21 illustrate a tenth embodiment of a superconducting cable system according to the invention and generally indicated as 910. In this tenth embodiment like components have been accorded like reference numerals and unless otherwise stated perform a like function.

The cable system 910 comprises a plurality of liquid cryogen supply ducts 914 arranged in a circular array around a centrally located superconductor 912, all being contained within a surrounding vapour return duct 920. Each of the supply ducts 914 is enclosed within a cylindrical layer of an evaporation enabling medium 918 as hereinbefore described. An outer cryostat 922 surrounds the supply ducts 914 and defines a vacuum annulus 924.

Figures 22 and 23 illustrate an eleventh embodiment of a superconducting cable system according to the invention and generally indicated as 1010. In this eleventh embodiment like components have been accorded like reference numerals and unless otherwise stated perform a like function.

The cable system 1010 comprises centrally located superconductor 1012 contained with a primary liquid cryogen supply duct 1014a which is surrounded by an annular vapour return duct 1020 which is separated from the primary supply duct 1014 by a first vacuum annulus 1024a. Located within the vapour return duct 1020 is a plurality of secondary liquid cryogen supply ducts 1014b arranged in a circular array and each enclosed within a respective cylindrical layer of an evaporation enabling medium 1018 as hereinbefore described. An outer cryostat 1022 surrounds the vapour return duct 1020 and defines a second vacuum annulus 1024b.

In this eleventh embodiment the evaporative cooling circuit is used as a secondary cooling stage to maintain the liquefied cryogen temperature within the isolated primary flow channel or supply duct 1014a.

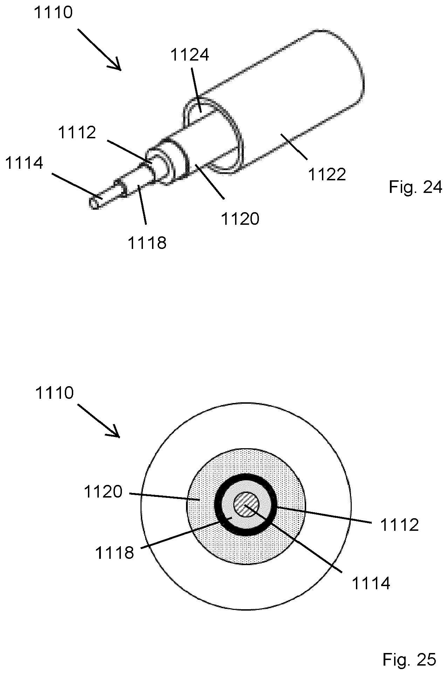

Figures 24 and 25 illustrate a twelfth embodiment of a superconducting cable system according to the invention and generally indicated as 1110. In this twelfth embodiment like components have been accorded like reference numerals and unless otherwise stated perform a like function.

The cable system 1110 comprises a superconductor 1112 which is annular or of hollow cylindrical form and could for example be manufactured using standard HTS cable wrapping and manufacturing techniques.

The superconductor 1112 surrounds and encloses a liquid cryogen supply duct 1114 with a layer of an evaporation enabling medium 1118 disposed therebetween and on which the superconductor 1112 is supported. Thus the evaporation enabling medium 1118 provides structural support to the superconductor 1112, and may also act as a former during the manufacture of the superconductor 1112.

The superconductor 1112 is surrounded by a vapour return duct 1120 which is further surrounded by an outer cryostat 1122 defining a vacuum annulus 1124.

Adequate spacing must be allowed between the tapes and layers (not shown) forming the superconductor 1112 to enable the transfer of evaporated gaseous cryogen from the evaporation enabling medium 1118 to the vapour return duct 1120.

The configuration of the twelfth embodiment reduces the number of components within the cable system 1210 and therefore lends itself to simplified manufacturing techniques as the superconductor 1112 may be wound around the evaporation enabling medium 1118 using any suitable tape winding techniques.

It will be appreciated that a discrete fluid permeable sidewall (not shown) could be included as an interface between the supply duct 1114 and the evaporation enabling medium 1118 in this embodiment, and in any other embodiment in which such a discrete sidewall is not explicitly disclosed. Similarly a gas permeable but liquid impermeable membrane (not shown) may be provided to prevent liquid cryogen within the evaporation enabling medium from entering the vapour return duct.

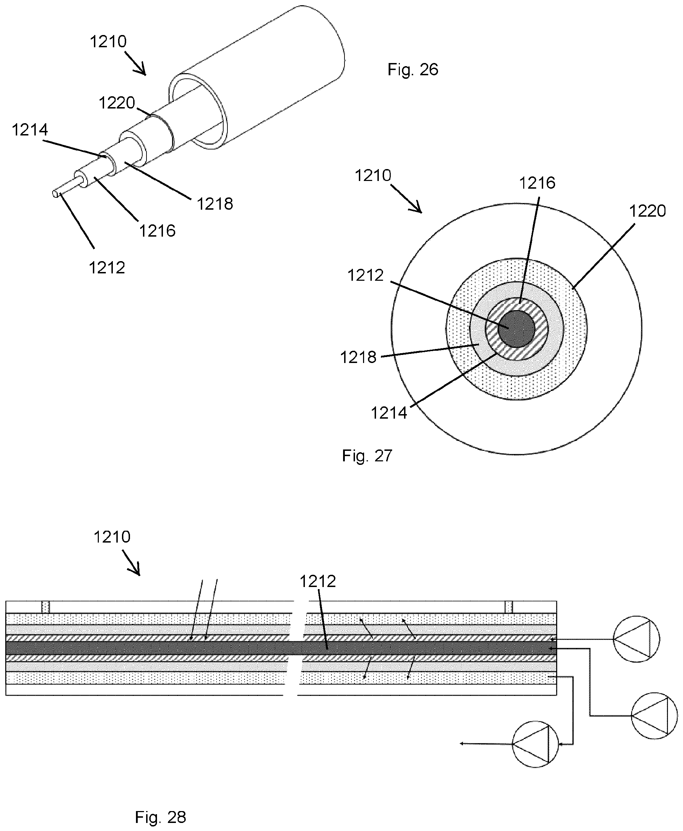

Figures 26 to 28 illustrate an embodiment of a cryogen conduit according an aspect of the present invention, generally indicated as 1210, which utilises the general design and operating functionality of the superconducting cable system of the invention, but in the absence of a superconductor, and for the purpose of transporting cryogenic fluid(s), for example but not limited to liquid hydrogen, liquid helium, liquefied natural gas, etc. Like components have been accorded like reference numerals and unless otherwise stated perform a like function.

The cryogen conduit 1210 contains a cryogen transfer line 1212 in place of a superconductor, and carrying a cryogen to be maintained at a desired temperature over a transport distance, and which is preferably pumped or displaced along the transfer line 1212. The conduit 1210 comprises a supply duct 1214 within which the transfer line 1212 is contained in fluid isolation, the supply duct 1214 containing a separate supply of a working cryogen 1216 surrounding the transfer line 1212 and in thermal communication therewith. Surrounding the supply duct 1214 is a layer of an evaporation enabling medium 1218 in fluid communication with the working cryogen 1216. The evaporation enabling medium 1218 is then surrounding by a vapour return duct 1220.

The cryogen conduit 1210 operates in essentially the same manner as the superconducting cable system 10 illustrated in Figure 1 but with the superconductor replaced with the cryogen transfer line 1212. As such the temperature of the cryogen contained in the transfer line 1212 can be controlled by the extraction of heat which occurs when the working cryogen 1216 evaporates through the evaporation enabling medium 1218 into the vapour return duct 1220 as hereinbefore described in detail.

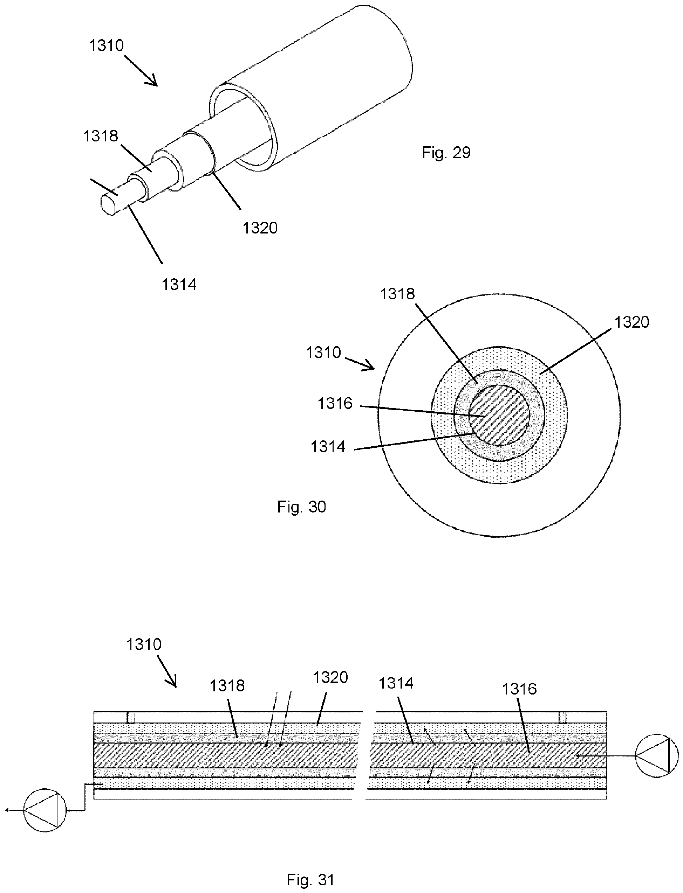

Figures 29 to 31 illustrate an alternative embodiment of a cryogen conduit according to the present invention and generally indicated as 1310. Like components have again been accorded like reference numerals and unless otherwise stated perform a like function.

The cryogen conduit 1310 comprises a supply duct 1314 containing a cryogen 1316 which is both the bulk cryogen to be transported by the conduit 1310 and also the working cryogen a portion of which is evaporated in order to achieve temperature control of the remaining liquid cryogen 1316, again as hereinbefore described. The supply duct 1314 is surrounded and defined by an annular layer of an evaporation enabling medium 1318 in liquid communication with the supply duct 1314, and which is surrounded by an outer vapor return duct 1320. Thus a portion of the liquid cryogen 1316 within the supply duct 1314 can migrate through the evaporation enabling medium 1318, preferably under a pressure differential, undergoing a phase change and extracting heat, to pass as a vapour into the vapor return duct 1320. This removal of heat allows the remaining liquid cryogen 1316 to be maintained at a suitable temperature for transport over the length of the cryogen conduit 1310, which may for example be several or hundreds of kilometres in length.

It will therefore be appreciated that the particular arrangement of the one or more supply ducts, vapour return ducts, the evaporation enabling medium and insulation, etc. of any of the superconducting cable system embodiments described herein may be employed with a cryogen conduit according to the invention.

In the various disclosed embodiments of the invention, the combination of a primary flow channel or supply duct, evaporation enabling medium and vapour return duct absorb heat primarily through the cryogen latent heat of vaporization, providing a significant increase in the heat processing capabilities of the cable system or cryogen conduit. However it is also envisaged that the cable system or cryogen conduit may additionally absorb and remove heat through sensible heating of both the liquid and/or gaseous cryogens as secondary and tertiary mechanisms, which enables the cryogen to absorb much more heat per unit weight than a standard subcooled system. This reduces the required flow rate and subsequent pressure within the system, lowering the structural requirements of the containment of the cryogen. The improved thermal and hydraulic efficiency allows the superconducting cable system or cryogen conduit of the invention to achieve much longer distances with lower flow rates and without additional intermittent cooling.

The invention is not limited to the embodiments described herein but can be amended or modified without departing from the scope of the present invention.

**Claims**

1. A superconducting cable system comprising at least one liquid permeable supply duct; a supply of cryogenic fluid within a lumen of the at least one supply duct; at least one superconductor extending longitudinally of the at least one supply duct and in thermal communication with the cryogenic fluid; at least one vapour return duct; and an evaporation enabling medium disposed between the at least one supply duct and the at least one vapour return duct and arranged to affect a phase change of the cryogen therein through the latent heat of vaporization.

2. A superconducting cable system according to any preceding claim in which the evaporation enabling medium has permeability in the range of between $10^{-12}$ and $10^{-14}$ $m^2$.

3. A superconducting cable system according to any preceding claim in which the evaporation enabling medium comprises a capillary structure, a wick and/or a porous medium.

4. A superconducting cable system according to claim 3 in which the evaporation enabling medium has porosity in the range of between 60% and 90%.

5. A superconducting cable system according to claim 3 or 4 in which the evaporation enabling medium has a pore size in the range of between $0.15\mu m$ and $10\mu m$.

6. A superconducting cable system according to any preceding claim in which the evaporation enabling medium comprises a metallic and/or a polymer or polymer composite material.

7. A superconducting cable system according to any preceding claim in which the evaporation enabling medium comprises a layered or laminated structure.

8. A superconducting cable system according to any preceding claim in which the evaporation enabling medium comprises open celled foam.

9. A superconducting cable system according to any preceding claim in which the evaporation enabling medium comprises a permeable substrate.

10. A superconducting cable system according to any preceding claim in which the at least one superconductor is in retained within a lumen of the at least one supply duct.

11. A superconducting cable system according to any preceding claim comprising a pressure differential generator operable to establish a pressure differential between the at least one supply duct and the at least on vapour return duct in the range of between 1 bar and 25 bar.

12. A superconducting cable system according to claim 11 in which the pressure differential generator is operable to modulate the pressure differential.

13. A superconducting cable system according to any preceding claim comprising a pressure release system operable to release pressure from within the at least one vapour return duct.

14. A superconducting cable system according to any preceding claim in which the at least one supply duct is surrounded by the evaporation enabling medium.

15. A superconducting cable system according to any preceding claim in which the at least one superconductor, at least one supply duct, evaporation enabling medium and at least one vapour return duct are concentrically arranged.

16. A method for controlling the temperature of a material contained within an elongate conduit, the method comprising the steps of forcing a liquid cryogen along a supply path within the conduit and in thermal communication with the material; driving at least a portion of the liquid cryogen across an evaporation enabling medium and absorbing heat so as to evaporate into a vapour return duct using the latent heat of vaporization; and extracting the vaporised cryogen from the vapour return duct.

17. A method for controlling the temperature of a material according to claim 16 comprising utilising capillary action to move the cryogen through the evaporation enabling medium.

18. A method for controlling the temperature of a material according to claim 16 comprising driving the cryogen radially outwardly from the at least one supply path through the evaporation enabling medium to the at least one vapour return duct.

19. A method for controlling the temperature of a material according to claim 16 comprising driving the cryogen radially inwardly from the at least one supply path through the evaporation enabling medium to the at least one vapour return duct.

20. A method for controlling the temperature of a material according to any of claims 16 to 19 comprising establishing a pressure differential between the at least one supply duct and the at least on vapour return duct in the range of between 1 bar and 25 bar.

21. A method according to any of claims 16 to 20 in which the material comprises a superconductor extending longitudinally within the conduit and arranged in thermal communication with the liquid cryogen.

22. A cryogen conduit comprising at least one liquid permeable supply duct; a supply of cryogenic fluid within a lumen of the at least one supply duct; at least one vapour return duct;
and an evaporation enabling medium disposed between the at least one supply duct and the at least one vapour return duct and arranged to affect a phase change of at least a portion of the cryogen therein through the latent heat of vaporization.

**Amended claims in accordance with Rule 137(2) EPC.**

1. A superconducting cable system (10; 110; 210; 310; 410; 510; 610; 710; 810; 910; 1010; 1110; 1210) comprising at least one liquid permeable supply duct (14; 114; 214; 314; 414; 514; 614; 714; 814; 914; 1014; 1114; 1214); a supply of cryogenic fluid within a lumen of the at least one supply duct; at least one superconductor (12; 112; 212; 314; 414; 514; 614; 714; 814; 914; 1014; 1114; 1214) extending longitudinally of the at least one supply duct and in thermal communication with the cryogenic fluid; at least one vapour return duct (20; 120; 220; 320; 420; 520; 620; 720; 820; 920; 1020; 1120; 1220); and an evaporation enabling medium (18; 118; 218; 318; 418; 518; 618; 718; 818; 918; 1018; 1118; 1218) disposed between the at least one supply duct and the at least one vapour return duct and arranged to affect a phase change of the cryogen therein through the latent heat of vaporization.

2. A superconducting cable system according to any preceding claim in which the evaporation enabling medium has permeability in the range of between $10^{-12}$ and $10^{-14}$ m$^2$.

3. A superconducting cable system according to any preceding claim in which the evaporation enabling medium comprises a capillary structure, a wick and/or a porous medium.

4. A superconducting cable system according to claim 3 in which the evaporation enabling medium has porosity in the range of between 60% and 90%.

5. A superconducting cable system according to claim 3 or 4 in which the evaporation enabling medium has a pore size in the range of between 0.15$\mu$m and 10$\mu$m.

6. A superconducting cable system according to any preceding claim in which the evaporation enabling medium comprises a metallic and/or a polymer or polymer composite material.

7. A superconducting cable system according to any preceding claim in which the evaporation enabling medium comprises a layered or laminated structure.

8. A superconducting cable system according to any preceding claim in which the evaporation enabling medium comprises open celled foam.

9. A superconducting cable system according to any preceding claim in which the evaporation enabling medium comprises a permeable substrate.

10. A superconducting cable system according to any preceding claim in which the at least one superconductor is in retained within a lumen of the at least one supply duct.

11. A superconducting cable system according to any preceding claim comprising a pressure differential generator operable to establish a pressure differential between the at least one supply duct and the at least on vapour return duct in the range of between 1 bar and 25 bar.

12. A superconducting cable system according to claim 11 in which the pressure differential generator (26, 28) is operable to modulate the pressure differential.

13. A superconducting cable system according to any preceding claim comprising a pressure release system operable to release pressure from within the at least one vapour return duct.

14. A superconducting cable system according to any preceding claim in which the at least one supply duct is surrounded by the evaporation enabling medium.

15. A superconducting cable system according to any preceding claim in which the at least one superconductor, at least one supply duct, evaporation enabling medium and at least one vapour return duct are concentrically arranged.

16. A method for controlling the temperature of a superconductor (12; 112; 212; 314; 414; 514; 614; 714; 814; 914; 1014; 1114; 1214) contained within an elongate conduit (14; 114; 214; 314; 414; 514; 614; 714; 814; 914; 1014; 1114; 1214), the method comprising the steps of forcing a liquid cryogen along a supply path within the conduit and in thermal communication with the superconductor; driving at least a portion of the liquid cryogen across an evaporation enabling medium (18; 118; 218; 318; 418; 518; 618; 718; 818; 918; 1018; 1118; 1218) and absorbing heat so as to evaporate into a vapour return duct using the latent heat of vaporization; and extracting the vaporised cryogen from the vapour return duct (20; 120; 220; 320; 420; 520; 620; 720; 820; 920; 1020; 1120; 1220).

17. A method for controlling the temperature of a material according to claim 16 comprising utilising capillary action to move the cryogen through the evaporation enabling medium.

**18.** A method for controlling the temperature of a material according to claim 16 comprising driving the cryogen radially outwardly from the at least one supply path through the evaporation enabling medium to the at least one vapour return duct.

**19.** A method for controlling the temperature of a material according to claim 16 comprising driving the cryogen radially inwardly from the at least one supply path through the evaporation enabling medium to the at least one vapour return duct.

**20.** A method for controlling the temperature of a material according to any of claims 16 to 19 comprising establishing a pressure differential between the at least one supply duct and the at least on vapour return duct in the range of between 1 bar and 25 bar.

**21.** A method according to any of claims 16 to 20 in which the superconductor extends longitudinally within the conduit and is arranged in thermal communication with the liquid cryogen.

**22.**

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

1310

1318

1314

1320

Fig. 29

1318

1320

1310

1316

1314

Fig. 30

1310

1318    1320    1314    1316

Fig. 31

Europäisches
Patentamt

European
Patent Office

Office européen
des brevets

# EUROPEAN SEARCH REPORT

Application Number

EP 21 21 4563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/170298 A1 (LASKARIS EVANGELOS TRIFON [US]) 21 November 2002 (2002-11-21) | 1,13,14, 16,18, 21,22 | INV.<br>H01B12/16<br>F28D15/00 |
| Y | * paragraphs [0015], [0024], [0043] *<br>* page 3; figure 3 * | 10,15 | |
| X | WO 2008/148390 A1 (NKT CABLES ULTERA AS [DK]; WILLEN DAG [SE] ET AL.) 11 December 2008 (2008-12-11) | 1,3,4,6, 8,9,11, 12,16, 20-22 | |
| Y | * page 2, line 22 - line 27 *<br>* page 7, line 12 - line 18 *<br>* claim 9 *<br>* page 11, line 26 - line 35 * | 10,15 | |
| Y | WO 2011/112485 A1 (TECHNOLOGY APPLIC INC [US]; BAUMGARTNER ROLF GERALD [US] ET AL.) 15 September 2011 (2011-09-15) * figures 1A, 1B, 2 * | 10,15 | |
| A | WO 02/25672 A2 (SOUTHWIRE CO [US]; SINHA UDAY K [US] ET AL.) 28 March 2002 (2002-03-28) * figure 1 * | 1-22 | TECHNICAL FIELDS SEARCHED (IPC)<br><br>H01B<br>F28D<br>C09K<br>F28F |
| A | US 3 612 742 A (SNOWDEN DONALD P ET AL) 12 October 1971 (1971-10-12) * figures 1-2 * | 1-22 | |

The present search report has been drawn up for all claims

| Place of search | Date of completion of the search | Examiner |
|---|---|---|
| The Hague | 25 May 2022 | Bossi, Paolo |

## ANNEX TO THE EUROPEAN SEARCH REPORT
## ON EUROPEAN PATENT APPLICATION NO.

EP 21 21 4563

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2022

| Patent document cited in search report | Publication date | Patent family member(s) | Publication date |
|---|---|---|---|
| US 2002170298 A1 | 21-11-2002 | BR 0201806 A | 11-03-2003 |
| | | CA 2384578 A1 | 15-11-2002 |
| | | CN 1385948 A | 18-12-2002 |
| | | CZ 20021672 A3 | 12-02-2003 |
| | | EP 1261118 A1 | 27-11-2002 |
| | | JP 4001365 B2 | 31-10-2007 |
| | | JP 2003032963 A | 31-01-2003 |
| | | KR 20020087349 A | 22-11-2002 |
| | | MX PA02004836 A | 13-12-2004 |
| | | NO 331158 B1 | 24-10-2011 |
| | | PL 353902 A1 | 18-11-2002 |
| | | US 2002170298 A1 | 21-11-2002 |
| WO 2008148390 A1 | 11-12-2008 | EP 2150961 A1 | 10-02-2010 |
| | | US 2010179064 A1 | 15-07-2010 |
| | | WO 2008148390 A1 | 11-12-2008 |
| WO 2011112485 A1 | 15-09-2011 | US 2012091144 A1 | 19-04-2012 |
| | | WO 2011112485 A1 | 15-09-2011 |
| WO 0225672 A2 | 28-03-2002 | AU 9086201 A | 02-04-2002 |
| | | CN 1483206 A | 17-03-2004 |
| | | EP 1323172 A2 | 02-07-2003 |
| | | JP 2004510290 A | 02-04-2004 |
| | | WO 0225672 A2 | 28-03-2002 |
| US 3612742 A | 12-10-1971 | NONE | |

EPO FORM P0459

For more details about this annex : see Official Journal of the European Patent Office, No. 12/82